(19) Europäisches Patentamt
European Patent Office
Office européen des brevets

(11) EP 0 661 305 B1

(12) EUROPÄISCHE PATENTSCHRIFT

(45) Veröffentlichungstag und Bekanntmachung des Hinweises auf die Patenterteilung:
**16.04.1997 Patentblatt 1997/16**

(51) Int Cl.[6]: **C08F 220/12**, C08F 218/04, D06M 15/263

(21) Anmeldenummer: **94119703.0**

(22) Anmeldetag: **14.12.1994**

(54) **Formaldehydfreie wässrige Kunstharzdispersionen**

Aqueous dispersions of synthetic resins without formaldehyde

Dispersions aqueuses de résines synthétiques contenant pas de formaldéhyde

(84) Benannte Vertragsstaaten:
**DE ES FR GB IT NL SE**

(30) Priorität: **23.12.1993 DE 4344149**

(43) Veröffentlichungstag der Anmeldung:
**05.07.1995 Patentblatt 1995/27**

(73) Patentinhaber: **BASF Aktiengesellschaft**
**67063 Ludwigshafen (DE)**

(72) Erfinder:
- **Rupaner, Robert, Dr.**
  **D-61476 Kronberg (DE)**
- **Schumacher, Karl-Heinz, Dr.**
  **D-67433 Neustadt (DE)**
- **Weber, Manfred**
  **D-68199 Mannheim (DE)**

(56) Entgegenhaltungen:
**EP-A- 0 019 169**
**EP-A- 0 392 350**
**DE-A- 3 507 154**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 661 305 B1

## Beschreibung

Die vorliegende Erfindung betrifft formaldehydfreie wäßrige Kunstharzdispersionen, erhältlich durch einstufige Emulsionspolymerisation von Monomergemischen bestehend aus

(A) 55 bis 94,5 Gew.-% wenigstens eines Monomeren aus der Gruppe der Acrylsäure- und Methacrylsäureester con $C_1$-$C_{14}$-Alkanolen, der Vinylester von bis zu 5 C-Atomen tragenden aliphatischen Monocarbonsäure sowie Styrol (Monomere A),

(B) 0,5 bis 40 Gew.-% wenigstens eines der Monomeren Acrylnitril oder Methacrylnitril (Monomere B),

(C) 0,5 bis 10 Gew.-% wenigstens eines Monomeren der allgemeinen Formel I

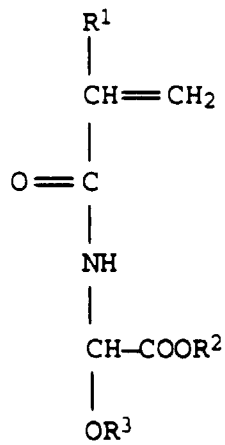

I

in der $R^1$ für Wasserstoff oder die Methylgruppe steht und $R^2$ und $R^3$ unabhängig voneinander Wasserstoff oder einen $C_1$-$C_4$-Alkylrest bedeuten (Monomere C),

D) 0 bis 5 Gew.-% wenigstens eines Monomeren aus der Gruppe der 3 bis 5 C-Atome tragenden $\alpha,\beta$-ungesättigten Mono- und Dicarbonsäuren, deren Amiden und Anhydriden (Monomere D), und

E) 0 bis 3 Gew.-% wenigstens eines weiteren bifunktionellen Monomeren (Monomere E).

Weiterhin betrifft die Erfindung ein Verfahren zur Herstellung solcher Dispersionen, deren Verwendung als Bindemittel für textile Flächengebilde sowie Faservliese, hergestellt mit Hilfe dieser Dispersionen.

Vliesstoffe sollen in der Regel außer einer guten Trockenreißfestigkeit auch im nassen Zustand eine ausreichende Festigkeit aufweisen, um z. B. den bei Waschvorgängen auftretenden mechanischen Beanspruchungen standzuhalten. Bei vielen Anwendungen gelten gleiche Forderungen für den Prozeß der chemischen Reinigung, bei welchem eine schwache Lösungsmittelbeständigkeit des Binders und eine hohe Affinität der Faser zum Lösemittel die Hafteigenschaften zwischen Faser und Binder stark herabsetzen und damit auch die mechanischen Eigenschaften der Vliesstoffe während des Reinigungsvorganges nachteilig beeinträchtigen kann. Um Vliesstoffen eine gute Naßfestigkeit und Reinigungsmittelbeständigkeit zu verleihen, ist es üblich, das Vlies mit Polymerdispersionen zu binden, die selbstvernetzende Gruppen, z.B. N-Methylolgruppen, aufweisen, (wie es aus der US-A 3 137,589 und der US-A 40 01 801 sowie der DE-OS 27 26 806 oder aus der EP-A 311 908) bekannt ist.

Aus der EP-A 19 169 sind Binde-, Imprägnier- und Überzugsmittel bekannt, die nach Wärmebehandlung beständig gegenüber Wäsche oder chemische Reinigung sind. Diese enthalten meist bis zu 80% und mehr Monomere auf Basis Butadien, Styrol, Acrylnitril aber auch häufig Gemische aus (Meth)Acrylsäurestern und/oder Vinylester in Kombination mit acrylamidhaltigen Monomeren. Geeignete funktionalisierte amidhaltige Monomere sind die N-Methylolderivate von Acryl- und Methacrylsäureamid. Sie erweisen sich als ausgezeichnete Vernetzungsmittel für Polymerisate, enthalten jedoch zwangsweise einen unbestimmten Anteil an Formaldehyd, welcher als toxikologisch bedenklich gilt und daher in vielen Gebrauchsartikeln unerwünscht ist. Auch während des Trocknungsprozesses derartiger Polymerisate wird Formaldehyd freigesetzt.

Es ist weiterhin bekannt, derartige Polymerisate in Form von wäßrigen Polymerdispersionen herzustellen und zur

Verfestigung von Fasergebilden wie gewebten oder nichtgewebten Materialien, insbesondere von Faservliesen einzusetzen. Ein besonderer Bedarf besteht an Binde- und Imprägniermitteln, die zu Vliesstoffen führen, die sowohl ausreichende mechanische Eigenschaften im trockenen, als auch im nassen und im lösemittelfeuchten Zustand aufweisen und die frei von Formaldehyd oder anderen gesundheitlich bedenklichen Verbindungen sind.

Formaldehydfreie Bindemittel mit verbesserter Naßfestigkeit sind nach der DE-A 35 07 154 durch Copolymerisation von Acrylamidoglykoleinheiten mit (Meth)Acrylsäureestern erhältlich. Die Copolymerisate können zur Erzielung einer bestimmten Glasübergangstemperatur auch Monomere wie Styrol oder (Meth)Acrylnitril enthalten (S7.7, Z. 8). Die auf diese Weise zugänglichen Bindemittel verfügen über keinerlei Festigkeit gegenüber organischen Lösemitteln; die Lehre empfiehlt zur Erreichung dieser Eigenschaft zusätzliche vernetzende Substanzen, wie Glyoxal, einzusetzen.

In der EP-A 237 643 sind ebenfalls formaldehydfreie Bindemittel für Vliese auf Basis Vinylacetat/ Ethylen beschrieben, die in Gegenwart von Acrylamidogylkolderivaten hergestellt wurden, aber frei von Acrylnitril sind. Sie weisen einen deutlichen Mangel an Beständigkeit gegenüber Lösungsmitteln auf.

Die Mitverwendung von Acrylnitril selbst führt bereits zur Anhebung der Beständigkeit des Polymerisates gegenüber Lösungsmit(vgl.: A.E. Wang et al., J. Coated Fabrics, Vol. 11 (1982) 208-225). Die Copolymerisation von Acrylnitril erhöht jedoch auch die Glastemperatur derartiger Polymerisate. So zeigen beispielsweise Butadien-AN-Copolymerisate (NBR) mit steigendem AN-Gehalt im Copolymerisat zunehmende Härte des Bindemittel-Filmes sowie eine Abnahme der Quellbarkeit in Fett, Öl und Lösemittel. Aber erst bei sehr hohem AN-Anteil und drastischer Vernetzung (bzw. Vulkanisation) werden brauchbare Lösungsmittelbeständigkeiten, etwa vergleichbar denen der Acrylatbindemittel, erhalten. Ein hoher Anteil an Acrylnitril im Polymerisat ist nicht erwünscht, denn Bindemittel für Vliesstoffe sollen zu möglichst weichen, flexilen oder flauschigen Materialien führen, die einen ausgezeichneten Griff aufweisen. Durch hohe Anteile an Acrylnitril erhält der Bindemittelfilm zudem einen unerwünschten gelben Farbstich, Vliesen einen abstoßenden, alt und unrein, "vergilbt", aussehenden Eindruck vermitteln. Die hohen Anforderungen an Aussehen und Lösungsmittelbeständigkeit können daher nicht alleine nur durch einen entsprechend hohen Anteil an Acrylnitril erhalten werden. Um auch die erforderlichen mechanischen Eigenschaften zu erreichen, ist ferner die Mitverwendung eines selbstvernetzenden Systemes erforderlich. (vgl. "Vliesstoffe", 1. Auflage S. 57ff, Thieme Verlag 1982).

Weiterhin ist aus der EP-A 392 350 und EP-A 311 908 die Herstellung von Dispersionsbindemitteln bekannt, die optional Acrylnitril und Acrylamidoglykolderivate enthalten. Derartige Bindemittel verfügen über die für Hygieneartikel, wie Windeln, wichtige Eigenschaft der Heißsiegelbarkeit.

Die EP-A 392 350 beschreibt Kunstharzdispersionen aus Vinylestern, Acrylamidoglykolsäure oder eines Derivates hiervon sowie optional eines Monomeren wie beispielsweise Acrylnitril. Diese Kunstharzdispersionen verfügen über gute Wasch- und Reinigungsmittelbeständigkeit und gleichzeitig über die Fähigkeit der siegelbarkeit.

Ebenso sind aus der EP-A 311 908 entsprechende Polymerisate, zu deren Herstellung ebenfalls Vinylester mitverwendet wurden, mit der Fähigkeit zur Heißsiegelung und der Bildung von "wasch- und reinigungsbeständigen" Bindemitteln bekannt, die jedoch durch eine aufwendigere zweistufige Fahrweise erhalten werden.

Aufgabe der vorliegenden Erfindung war es nun, wäßrige Copolymerisat-Dispersionen zu finden, welche bei Verwendung als Bindemittel und Imprägniermittel für Vliesstoffe diesen Vliesstoffen gute mechanische Eigenschaften nicht nur im trockenen, sondern auch im nassen oder lösemittelfeuchten Zustand verleihen und frei von Formaldehyd oder anderen gesundheitlich bedenklichen Verbindungen sind. Es war weiterhin Aufgabe der Erfindung, Bindemittel für die Verfestigung von textilen Flächengebilden zu finden, welche diesen textile oder watteartige voluminöse Eigenschaften und ihren weichen, flexiblen Griff erhalten, ohne deren mechanische oder chemische Beständigkeit zu beeinträchtigen.

Demgemäß wurden die eingangs definierten wäßrigen Kunstharzdispersionen gefunden.

Die Monomeren (A) werden in Mengen von 50 bis 99, bevorzugt 55 bis 94,5 Gew.-%, besonders bevorzugt 70 bis 80 Gew.-% eingesetzt. Als Monomere (A) kommen vor allem die Acrylsäure- und/oder Methacrylsäureester von $C_1$-$C_{14}$-Alkanolen in Betracht, bevorzugt von $C_1$-$C_8$-Alkanolen. Besonders bevorzugt sind Acrylsäureester wie Methylacrylat, Ethylacrylat, iso-Propylacrylat, n-Butylacrylat, iso-Butylacrylat oder auch 2-Ethylhexylacrylat. Weiterhin kommen in Betracht die Vinylester von 3 bis 5 C-Atomen tragenden gesättigten Monocarbonsäuren wie beispielsweise Vinylacetat oder Vinylpropionat. Ebenso kann Styrol ganz oder teilweise als Monomer (A) eingesetzt werden. Die bevorzugte Mischung der Monomeren (A) wird in der Weise gewählt, daß eine nur aus diesen Monomeren aufgebautes Polymerisat Glasübergangstemperaturen von kleiner 50°C, bevorzugt kleiner 30°C, aufweisen würde. Dies kann mit Hilfe der Beziehung von Fox erfolgen.

Nach Fox (T.G. Fox, Bull. Am. Phys. Soc. (Ser. II) 1, 123 [1956] gilt für die Glastemperatur von Mischpolymerisaten in guter Näherung:

$$\frac{1}{Tg} = \frac{X^1}{Tg^1} + \frac{X^2}{Tg^2} \cdots \frac{X^n}{Tg^n},$$

wobei $X^1$, $X^2$, ...,$X^n$ die Massenbrüche der Monomeren 1, 2 ..., n und $Tg^1$, $Tg^2$, ..., $Tg^n$ die Glastemperaturen der jeweils nur aus einem der Monomeren 1, 2, ... oder n aufgebauten Polymeren in Grad Kelvin bedeuten. Die Glastemperaturen dieser Homopolymerisate der oben aufgeführten Monomeren I, II und IV sind bekannt und z.B. in J. Brandrup, e.H. Immergut, Polymer Handbook 1st Ed. J. Wiley, New York 1966 und 2nd Ed. J. Wiley, New York 1975 aufgeführt.

Als Monomere (B), welche in Mengen von 0,5 bis 40, bevorzugt 3 bis 30, besonders bevorzugt 5 bis 25 Gew.-%, eingesetzt werden, kommen Acrylnitril und/oder Methacrylnitril in Betracht, wobei Acrylnitril bevorzugt ist. Höhere Anteile an nitrilhaltigen Monomeren führen zu schlechter verfilmenden Polymerisaten, die den Vliesen auch eine höhere Vliesstoffhärte verleihen.

Als Monomere (C) kommen Monomere der allgemeinen Formel I in Betracht

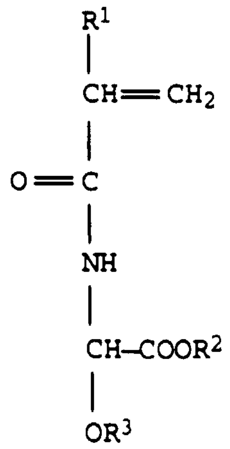

I

wobei $R^1$ für Wasserstoff oder die Methylgruppe steht und $R^2$ und $R^3$ unabhängig voneinander Wasserstoff oder einen $C_1$-$C_4$-Alkylrest bedeuten. Bevorzugt sind solche Monomere C bei denen $R^2$ die gleiche Bedeutung wie $R^3$ hat, wobei $R^1$, $R^2$ und $R^3$ ganz besonders bevorzugt Wasserstoff bedeuten. Die Monomere C werden in Mengen von 0,5 bis 10 Gew.-%, bevorzugt 1 bis 8 Gew.-%, besonders bevorzugt 2 bis 6 Gew.-% eingesetzt.

Acrylamidoglycolsäure ($R^1$, $R^2$, $R^3$ gleich Wasserstoff) kann auch durch Umsetzung in wäßriger Lösung bei erhöhter Temperatur des entsprechenden Säureamides mit einer geeigneten Carbonylverbindung salzfrei hergestellt und ohne Isolierung weiter verarbeitet werden. Besonders bevorzugt wird ein Umsetzungsprodukt aus Acrylamid und glyoxylsäure eingesetzt. Um einen Anstieg der Endviskosität der Polymerdispersion zu vermeiden, wird auf hohen Überschuß an Acrylamid verzichtet. Das bevorzugte molare Umsetzungsverhältnis von Säureamid zu Carbonylderivat liegt bei 1:1 bis 1.2:1. Diese Umsetzung ist beispielsweise in der EP-B 268 424 beschrieben.

Als Monomere (D), welche gewünschtenfalls copolymerisiert werden können, kommen 3 bis 5 C-Atome tragende monoolefinisch $\alpha,\beta$-ungesättigte Mono- und/oder Dicarbonsäuren und/oder deren Amide und/oder Anhydride in Betracht, bevorzugt Acrylsäure, Methacrylsäure, Acrylamid, Methacrylamid sowie Maleinsäure, Fumarsäure sowie Itaconsäure. Die Monomere D können in Mengen von bis zu 5, bevorzugt bis 3 Gew.-% copolymerisiert werden.

Weiterhin können als Monomere E bifunktionelle Monomere, welche zu einer Vorvernetzung des Polymerisats führen, in Mengen von bis zu 3 Gew.-% copolymerisiert werden. Als Monomere E kommen beispielsweise Bis(meth) acrylate in Betracht wie Butandiolbisacrylat, Polyethylenglycolbisacrylate, Polysiloxanbisacrylate, weiterhin Diolefine wie Divinylbenzol, Diallylphthalat oder (Meth)allyl(meth)-acrylate.

Die erfindungsgemäßen Dispersionen können nach allen gebräuchlichen Verfahren der Emulsionspolymerisation hergestellt werden. Bevorzugt ist eine halbkontinuierliche Fahrweise mit Monomeremulsionszufuhr. Die Kunstharzdispersionen werden zweckmäßig mit einem Feststoffanteil von 40-70 Gew.-% hergestellt. Zur Herstellung können anionische, nichtionische oder auch kationische Emulgiermittel, oder gegebenenfalls auch Gemische derartiger Verbindungen eingesetzt werden. Besonders bevorzugt zur Herstellung der Polymerisatdispersionen sind die gängigen, dem Fachmann wohlbekannte, Emulgiermittel wie ethoxilierte Fettalkohole oder Alkylphenole, deren Alkali- oder Ammoniumsalze der sulfatierten, phosphatierten oder sulfonierten Produkte; Alkyl- oder Alkylarylsulfonate, Sulfobernsteinsäureester oder -amide oder sulfonierte Alkyldiphenyloxide. Auch höhermolekulare Verbindungen, sog. Schutzkolloide, die sowohl synthetischen oder auch natürlichen Ursprunges sein können, können zur Stabilisierung der Polymerisate eingesetzt werden, z.B. Polyethylenoxide, Blockcopolymere, Stärkederivate, Polyvinylalkohol.

Die Polymerisate werden durch radikalische Polymerisation erhalten. Zur Herstellung der Polymerisate haben sich wasserlösliche Initiatoren wie die Alkalipersulfate gut bewährt. Weiterhin können auch Peroxide wie Wasserstoffperoxid, tert-Butylhydroperoxid, Cumolhydroperoxid und andere eingesetzt werden. Bevorzugt wird ihr Einsatz in sogenannten Rexodinitiatorsystemen, bei denen eine wäßrige Lösung einer reduzierenden Verbindung kontinuierlich zugegegeben wird. Beispiele derartiger Reduktionsmittel sind die Alkalimetallsalze der Hydroxymethylsulfinsäure, Natriumbisulfit, Natrium Acetonbisulfit, Natriumthiosulfat, Ascorbinsäure bzw. Isoascorbinsäure. Die Redoxinitiierung verläuft besonders gut in Gegenwart geringer Mengen an Metallsalzen, die in der Lage sind, leicht ihre Wertigkeit zu verändern wie z.B. Eisen-II-sulfat. Die Polymerisationstemperatur kann je nach gewähltem Initiierungssystem zwischen 5 und 95°C liegen.

Durch Nachbehandlung mit einem weiteren Redoxsystem bei Raumtemperatur oder auch darüber ist es möglich, den Umsatz stark anzuheben und den Anteil an Restmonomeren drastisch zu reduzieren. Auf diese Weise können Polymerdispersionen erhalten werden, bei denen bezüglich Monomer B ein Umsatz von über 99,9 % erreicht wird.

Zur Steuerung des Molekulargewichtes können gegebenenfalls auch Polymerisationsregler eingesetzt werden. Bevorzugte Verbindungen hierfür sind Mercaptane wie Alkylthioglykolate, tert-Dodecylmercaptan, Halogenverbindungen wie Tetrabrommethan oder auch verbindungen.

Weiterhin können den erfindungsgemäßen Dispersionen noch Additive wie Weichmacher, Entschäumungsmittel, Substanzen zur pH-Regulierung, Flammschutzmittel, Hydrophobiermittel, Netzmittel, Verdickungsmittel, Gleitmittel, Frostschutzmittel, Pigmente, Farbstoffe, Parfüms usw., die dem Fachmann wohlbekannt sind, ohne Einbuße der charakteristischen Eigenschaften zugesetzt werden. Zur zusätzlichen Katalyse der Vernetzungsreaktion ist der Zusatz an Säuren oder sauren Salzen möglich. Bevorzugt werden hierfür Schwefelsäure, Natriumhydrogensulfat, p-Toluolsulfonsäure, Ammoniumhydrogenphosphat, Zinknitrat oder -chlorid oder die entsprechenden Magnesiumsalze eingesetzt. In der Regel ist jedoch der Anteil der copolymerisierten Säuren ausreichend, um die Vernetzung des Bindemittels bei Herstell-pH-Wert zu gewährleisten.

Die erfindungsgemäßen Dispersionen eignen sich hervorragend als Bindemittel für textile Flächengebilde. Sie sind formaldehydfrei und weisen trotz des Acrylnitrilgehalts im Kunstharz einen sehr niedrigen Gehalt an freiem Acrylnitril auf.

Bevorzugte Ausführungsformen sind in den Ansprüchen 7 - 9 angegeben.

Die gemäß der Erfindung hergestellten textilen Flächengebilde zeichnen sich durch eine erhöhte Beständigkeit gegenüber organischen Lösungsmitteln, Fetten und Ölen aus. Ein typisches Anwendungsbeispiel ist die Herstellung von gebundenen Faservliesen auf Basis von Synthesefasern insbesondere von Polyesterfasern, die zur Herstellung von Füllvliesstoffen oder Einlagevliesstoffen dienen, wie sie als Füllmittel oder Verstärkungsmaterial für textile Kleidungsstücke oder auch als Möbelpolster dienen. Die wichtigste Anforderung an derartige Materialien ist die Formbeständigkeit. So soll sich ihre Struktur, ihr Volumen und auch ihre mechanische Eigenschaften nach Naßwäsche und auch nach chemischer Reinigung nicht verändern.

Ein anderes Anwendungsgebiet sind Filtermaterialien. Die wirre Anordnung der Fasern im Vliesstoff führt zu günstigen Abscheidevorrichtungen von Festteilchen aus strömenden Medien als eine gelmäßige Anordnung. Infolge ihrer im Vergleich zu Geweben wesentlich größerer aktiven Oberfläche sind die Vliesstoffe hervorragend geeignet für die Luftreinigung, die Industrieentstaubung und die Flüssigkeitsfiltration. Durch entsprechende Auswahl der Fasern, Bindemittel und der Herstellverfahren können sie den jeweils geforderten Bedingungen angepaßt werden, z.B. hinsichtlich der Filtertemperatur, Lösemittel- und Chemikalienbeständigkeit. Infolge hoher Druckbelastung beim Trennprozess werden hohe Anforderungen an die mechanischen Eigenschaften inbes. den Festigkeiten und Dehnungsverhalten der Filtermaterialien gestellt. Je nach Filtermedien wird eine Beständigkeit gegen Fette und Öle, z.B. bei Milchfiltern, oder gegen Lösemittel, gegen Schmiermittel und Öle, z.B. in Automobil-Luftfilter-Elementen, gefordert.

Ein weiteres Anwendungsgebiet sind Einwegschutzbekleidungen, wie Operationskittel oder Kleidungsschutz z.B. in Lackierbetrieben, die gegen Lösemittel oder deren Dämpfe beständig sein müssen.

Als Vliesfasern können alle für die Vliesstoffherstellung üblichen Fasermaterialien verwendet werden. Dies sind neben synthetischen Fasern wie Polyester, Polyamid oder Polypropylen auch Fasern natürlichen Ursprungs wie Zellstoff oder Zellwolle.

Die Vliesstoffherstellung erfolgt gemäß den allgemein bekannten Verfahren durch Badimprägnieren, Schäumimprägnieren, Besprühen, Pflatschen oder Bedrucken des Faservlieses mit der Dispersion, wobei die Dispersion gegebenenfalls mit Wasser verdünnt oder aber mit den üblichen Verdickungsmitteln verdickt wird, um eine bestimmte Verarbeitungsviskosität der Dispersion einzustellen. Der Vliesbehandlung mit der Dispersion schließt sich im allgemeinen eine Trocknung und Temperung des erhaltenen Vliesstoffes an, wobei die im synthetischen Polymeren der Dispersion enthaltenen vernetzend reagierenden Bestandteile miteinander und/oder mit anderen funktionellen Gruppen im Polymerisat der Dispersion und /oder mit funktionellen Gruppen der Vliesfasern reagieren, wodurch insbesondere die Naßfestigkeit der Vliesstoffe optimiert wird. Die Trocknungsbedingungen hängen von der Art des eingesetzten Trockners ab, üblicherweise liegt die Trocknungstemperatur zwischen 100 und 230°C, und die Dauer der Trocknung bzw. Temperung kann zwischen einigen Sekunden und mehreren Minuten betragen.

Das Mengenverhältnis Faser / Binder kann je nach der gewünschten Anwendung zwischen 1 : 1 und 50 : 1 (Gewichtsanteile) liegen, für die meisten Anwendungen liegt das Faser/Binder-Verhältnis zwischen 2 : 1 und 10 : 1.

Die in den nachstehenden Beispielen hergestellten Dispersionen und Vliesstoffe wurden nach den im folgenden

geschilderten Prüfmethoden beurteilt.

Prüfmethoden

Bestimmung der Viskosität der Dispersionen

Die Viskosität der Dispersionen wurde mittels Epprecht-Viskosimeter in DIN-Meßbechern und zugehörigen Rotoren bei 23°C durchgeführt. Die Viskosität wird in mPas angegeben.

Bestimmung der Oberflächenspannung der Dispersionen

Die Oberflächenspannung der Dispersionen wurde mittels eines Ringtensiometers (Fa. Lauda) durchgeführt. Die angegebenen Werte in mN/m stellen Mittelwerte aus 5 Einzelmessungen bei Raumtemperatur dar.

Bestimmung der Lichtdurchlässigkeit (LD)

Die Lichtdurchlässigkeit wird an einer mit Wasser auf einen Feststoffgehalt von 0,01 Gew.-% verdünnten Probe bestimmt.

Herstellung der Test-Vliesstoffe:

Ein längsgelegtes (Faserorientierung bevorzugt in einer Richtung, der Längsrichtung) Faservlies aus einer Mischung aus Zellwollfasern und Polyesterfasern (Mischungsverhältnis 30 : 70) mit einem Flächengewicht von 35 g/m2 wurde in unabhängigen Versuchen mit den Dispersionen aus den angeführten Beispielen und Vergleichsbeispielen, die zuvor auf einen einheitlichen Feststoffgehalt von 25 % verdünnt worden waren, getränkt, zur Abtrennung des überschüssigen Dispersionsanteils zwischen zwei gegenläufige Walzen gebracht und danach 2 min einer Temperatur von 150°C ausgesetzt. Der Bindemittelanteil der so erhaltenen Vliesstoffe betrug in allen Fällen 29 Gew.-%.

Untersuchungen an den gebundenen Vliesstoffen:

a) Reißfestigkeit
Aus den Vliesstoffen wurden 50 mm breite Streifen geschnitten und diese bei einer freien Einspannlänge von 10 cm im trockenen und im wassernassen Zustand, sowie nach Durchtränken mit Perchlorethylen zur Ermittlung der Reißfestigkeit in Analogie zur DIN 53 857 einem Streifenzugversuch ausgesetzt. Dabei wurden die Reißfestigkeiten (durch entsprechendes Ausschneiden der Prüfkörper) längs (l) und quer (q) zur Faservorzugsrichtung gemessen.

b) Biegesteifigkeit
Ferner wurden die Vliesstoffproben zur Ermittlung der Biegesteifigkeit, welche als Maß für die Weichheit herangezogen wird, um einen metallenen Dorn gebogen. Als Biegesteifigkeit wurde dabei die Kraft gemessen, die für das Biegen aufzuwenden war. Diese Kraft wurde längs und quer zur Faservorzugsrichtung gemessen. Eingesetzte Emulgiermittel:

Emulgator 1: 30 Gew.-%ige wäßrige Lösung eines neutralisierten, sulfatierten Fettalkoholethoxilates; Disponil FES 77® der Henkel AG

Emulgator 2: 20 Gew.-%ige wäßrige Lösung eines ethoxilierten Talgfettalkoholes (Emulan OG® der BASF AG)

Emulgator 3: 40 Gew.-%ige Lösung eines Gemisches aus neutralisiertem C12 und C14-Fettalkoholsulfates

Emulgator 4: 45 Gew.-%ige Lösung eines neutralisierten Alkyldiphenyloxidsulfonates; Dowfax 2A1® der Dow Chem.

Emulgator 5: 50 Gew.-%ige Lösung eines neutralisierten Sulfobernsteinsäureesters;: Lumiten IRA® der BASF AG

Abkürzungen:

AAG: Acrylamidoglykolsäure
MAGME: Acrylamidoglykolsäure-methylether-methylester

EA Ethylacrylat
BA n-Butylacrylat
AS Acrylsäure
AN Acrylnitril
EHA Ethylhexylacrylat
MA Methylacrylat
MMA Methylmethacrylat
VPr Vinylpropionat
S Styrol
AMol N-Methylolacrylamid
NaPS Natriumpersulfat

Beispiel 1

Dispersion 1.1:

Ein Gemisch aus 566 g Wasser und 45 g einer Monomeremulsion D1.1 wurden auf 85°C erhitzt und bei Erreichen einer Innentemperatur von 70°C mit 5% einer Lösung von 7.5 g Natriumperoxodisulfat in 200 g Wasser auf einmal versetzt. Nach 15 min wurde begonnen, unter Aufrechterhaltung der Polymerisationstemperatur den Rest der Monomeremulsion D1.1 in 120 min und den Rest der Initiator-Lösung in 135 min kontinuierlich zuzufahren. Nach beendeter Zugabe wurde weitere 60 min bei dieser Temperatur gehalten. Nach Abkühlen auf Raumtemperatur wird jeweils mit 0,2% bez. auf die Monomermasse einer wäßrigen Lösung von t-Butylhydroperoxid und Ascorbinsäure versetzt und eine Mischung aus 15g Emulgator I und 322.5 g Emulgator II zugegeben. Es wurde eine koagulatfreie Dispersion mit einem Feststoffanteil von 49 Gew.% erhalten. Der Anteil an freiem Acrylnitril ist <10 ppm (gaschromatographisch nachgewiesen).

Zusammensetzung von D1.1:

| | | |
|---|---|---|
| 450 g | [30 %]* | n-Butylacrylat |
| 682.5 g | [45.5%] | Ethylacrylat |
| 300 g | [20 %] | Acrylnitril |
| 52.5 g | [3.5 %] | Acrylamidoglykolsäure |
| 15 g | [1.0 %] | Acrylsäure |
| 3 g | | Natriumacetat |
| 75 g | | Emulgator 1 |
| 112.5 g | | Emulgator 2 |
| 580 g | | Wasser |

* Die Angaben in Klammern beziehen sich auf die reine Monomerzusammensetzung.

Beispiel 1.2-1.8

Die nachfolgenden Beispiele 1.2 bis 1.8 wurden in der gleichen Weise wie 1.1 hergestellt. Sie unterscheiden sich lediglich in der Monomerzusammensetzung.

Tabelle 1

| Bsp. | EA | BA | AN | AAG | AS | % NaPS * | pH | LD [%] | ν [mN/m] | η [mPa/s] |
|---|---|---|---|---|---|---|---|---|---|---|
| 1.1 | 45,5 | 30 | 20 | 3,5 | 1 | 0,5 | 3,2 | 56 | 39,5 | 19 |
| 1.2 | 35,5 | 40 | 20 | 3,5 | 1 | 0,5 | 2,4 | 59 | 39,0 | 18 |
| 1.3 | 25,5 | 50 | 20 | 3,5 | 1 | 0,5 | 2,5 | 56 | 39,3 | 18 |

* Gew.-%, bezogen auf gesamte Monomermenge

Tabelle 1 (fortgesetzt)

| Bsp. | EA | BA | AN | AAG | AS | % NaPS * | pH | LD [%] | ν [mN/m] | η [mPa/s] |
|---|---|---|---|---|---|---|---|---|---|---|
| 1.4 | 50,5 | 30 | 15 | 3,5 | 1 | 0,5 | 3,2 | 58 | 38,8 | 17 |
| 1.5 | - | 75,5 | 20 | 3,5 | 1 | 0,5 | 2,3 | 48 | 41 | 36 |
| 1.6 | - | 75,5 | 20 | 3,5 | 1 | 0,1 | 2,5 | 51 | 41,6 | 31 |

* Gew.-%, bezogen auf gesamte Monomermenge

Beispiel 2

Dispersion 2.1

Ein Gemisch aus 560 g Wasser, 2.5 g Emulgator 1, 10.0 g 30 Gew.%iges Wasserstoffperoxid und 45.0 g einer Monomeremulsion D2.1 wurden auf 60°C erhitzt und bei Erreichen einer Innentemperatur von 50°C mit 5% einer reduzierenden Lösung von 3.0 g Ascorbinsäure und 15 mg Eisen-II-sulfat in 200 g Wasser auf einmal versetzt. Nach 15 min wurde begonnen, unter Aufrechterhaltung der Polymerisationstemperatur den Rest der Monomeremulsion D2.1 in 120 min und den Rest der Reduktionslösung in 135 min kontinuierlich zuzufahren. Nach beendeter Zugabe wurde weitere 60 min bei dieser Temperatur gehalten. Nach Abkühlen auf Raumtemperatur wurde jeweils mit 0,2 Gew.-%, bezogen auf die Monomermenge, einer jeweils 10 gew-%igen wäßrigen Lösung von t-Butylhydroperoxid und Ascorbinsäure versetzt.

Zusammensetzung von D2.1

| | | |
|---|---|---|
| 450 g | [30 %]* | n-Butylacrylat |
| 682.5 g | [45.5%] | Ethylacrylat |
| 300 g | [20 %] | Acrylnitril |
| 52.5 g | [3.5%] | Acrylamidoglykolsäure |
| 15 g | [1.0 %] | Acrylsäure |
| 72.5 g | | Emulgator 1 |
| 37.5 g | | Emulgator 2 |
| 640 g | | Wasser |

Beispiele 2.2-2.4

Die nachfolgenden Beispiele 2.2 bis 2.4 wurden in der gleichen Weise wie 2.1 hergestellt. Sie unterscheiden sich lediglich in der Monomerzusammensetzung (vgl. Tab. 2). Die Zahlenangaben für die Monomere bedeuten Gew.-%, bezogen auf die Gesamtmonomermenge, welche der von D2.1 entspricht.

Tabelle 2

| Bsp. | EA | BA | EHA | AN | AAG | AS | pH | LD [%] | ν [mN/m] | η [mPa/s] |
|---|---|---|---|---|---|---|---|---|---|---|
| 2.1 | 45,5 | 30 | - | 20 | 3,5 | 1 | 2,2 | 81 | - | 67 |
| 2.2 | 65,5 | - | 10 | 20 | 3,5 | 1 | 2,3 | 82 | 47,7 | 63 |
| 2.3 | 75,5 | - | - | 20 | 3,5 | 1 | 2,4 | 73 | 42,8 | 41 |
| 2.4 | 65,5 | - | - | 30 | 3,5 | 1 | 2,3 | 77 | 41,6 | 37 |

Beispiel 3: Dispersion 3.1-3.7, 3.9, 3.10

Die Herstellung erfolgte wie bei Dispersion 1.1, jedoch wurde als Initiatorlösung eine Lösung aus 3.0 g Natriumpersulfat in 200 ml Wasser eingesetzt (0.2% bez. auf Gesamtmonomermasse).

Tabelle 3

| Bsp. | BA | EA | VPr | AN | AAG | MAG ME | BDA | AS | pH | LD [%] | η [mPas] |
|---|---|---|---|---|---|---|---|---|---|---|---|
| 3.1 | 76 | - | - | 20 | 3,0 | - | - | 1 | 2,4 | 56 | 24 |
| 3.2 | 75,5 | - | - | 20 | 3,5 | - | - | 1 | 2,5 | 51 | 38 |
| 3.3 | 75 | - | - | 20 | 4,0 | - | - | 1 | 2,1 | 56 | 98 |
| 3.4 | 74,5 | - | - | 20 | 4,5 | - | - | 1 | 2,1 | 54 | 211 |
| 3.5 | 75,3 | - | - | 20 | 3,5 | - | 0,2 | 1 | 2,3 | 51 | 39 |
| 3.6 | 75 | - | - | 20 | - | 4 | - | 1 | 3,1 | 55 | 18 |
| 3.7 | 79 | - | - | 16 | 4* | - | - | 1 | 2,1 | 48 | 340 |
| 3.8 | 79,5 | - | - | 16 | 3,5 | - | - | 1 | 2,0 | 48 | 74 |
| 3.9 | - | 47,7 | 30 | 20 | 2,5 | - | - | - | 2,7 | 58 | 17 |
| 3.10 | - | 45,5 | 30 | 20 | 2,5** | - | - | - | 2,7 | 62 | 26 |

* durch Umsetzung von AM und Glyoxylsäure erhalten

** enthält zusätzlich noch 2 % Acrylamid

Zu Beispiel 3.8.

66.4 g einer 50 Gew.%igen, wäßrigen Lösung von Glyoxylsäure und 73.6 g einer ebenfalls 50 Gew.%igen, wäßrigen Lösung von Acrylamid werden unter Rühren 4 Stunden bei 60°C gehalten, danach abgekühlt und mit 560 g Wasser zu einer wasserviskosen, leicht gelblichen Lösung verdünnt. pH-Wert= 1.4. 600 g dieser Lösung werden anstelle der Acrylamidoglykolsäure zur Herstellung der Monomeremulsion verwendet.

Beispiel 4 Dispersionen 4.1-4.3

Die Herstellung erfolgte analog Beispiel 3.2, jedoch unter Verwendung der Monomeremulsionen D4.1 bis D4.3. Zusammensetzung von D4.1

| | | |
|---|---|---|
| 1132 g | [75,5 %] | n-Butylacrylat |
| 300 g | [20 %] | Acrylnitril |
| 52,5 g | [3.5 %] | Acrylamidoglykolsäure |
| 15,0 g | [1.0 %] | Acrylsäure |
| 15,0 g | | Emulgator 3 |
| 1,5 g | | Natriumpyrophosphat |
| 660 g | | Wasser |

Zusammensetzung von D4.2

| | | |
|---|---|---|
| 1132 g | [75,5 %] | n-Butylacrylat |
| 300 g | [20 %] | Acrylnitril |
| 52,5 g | [3.5 %] | Acrylamidoglykolsäure |
| 15 g | [1.0 %] | Acrylsäure |
| 40 g | | Emulgator 4 |
| 1,5 g | | Natriumpyrophosphat |
| 686 g | | Wasser |

Zusammensetzung von D4.3

| | | |
|---|---|---|
| 1132 g | [75,5 %] | n-Butylacrylat |
| 300 g | [20 %] | Acrylnitril |
| 52,5 g | [3.5 %] | Acrylamidoglykolsäure |
| 15 g | [1.0 %] | Acrylsäure |
| 37,5 g | | Emulgator 5 |
| 112 g | | Emulgator 2 |
| 1,5 g | | Natriumpyrophosphat |
| 630 g | | Wasser |

Tabelle 4

| Bsp. | BA | AN | AAG | AS | pH | LD [%] | η [mPas] |
|---|---|---|---|---|---|---|---|
| 4.1 | 75,5 | 20 | 3,5 | 1 | 2,4 | 16 | 54 |
| 4.2 | 75,5 | 20 | 3,5 | 1 | 2,2 | 40 | 17 |
| 4.3 | 75,5 | 20 | 3,5 | 1 | 2,4 | 50 | 88 |

Beispiel: 5: Quellwerte in verschiedenen Lösungsmitteln

Analog Beispiel 1.1 wurden die Dispersionen 5a-f hergestellt. Die Dispersionen wurden bei 25°C und 80% relativer Luftfeuchtigkeit verfilmt, danach 10 min bei 150°C getempert und auf ihr Quellverhalten in verschiedenen Lösungs-

mitteln untersucht.

Tabelle 5

| Bsp. | Zusammensetzung | | | | | Tg* | Quellwerte (Lösungsmittelaufnahme) in % | | | | | | |
|---|---|---|---|---|---|---|---|---|---|---|---|---|---|
| | EA | BA | AN | AAG | AS | [°C] | $H_2O$ | Toluol | THF | Aceton | $CH_2Cl_2$ | PET*** | Öl*** |
| | | | | | | | 24 h | 2 h | 2 h | 2 h | 2 h | 24 h, 40° | 24 h, 40° |
| 5a | 75,5 | - | 20 | 3,5 | 1 | 23 | 128 | 250 | 3400 | 3000 | 4100 | 2040 | 104 |
| 5b | 95,5 | - | - | 3,5 | 1 | -11 | 153 | 790 | 1040 | 810 | 1640 | 1170 | 104 |
| 5c | 79 | - | 20 | - | 1 | | 112 | -* | -* | -* | -* | -* | 103 |
| 5d | - | 75,5 | 20 | 3,5 | 1 | -3 | 128 | 700 | 1560 | 1030 | 1880 | 1380 | 104 |
| 5e | - | 95,5 | - | 3,5 | 1 | -44 | 712 | 900 | 970 | 610 | 1320 | 900 | 132 |
| 5f | - | 79 | 20 | - | 1 | | 114 | -* | -* | -* | -* | -* | 104 |

Tg = Glasumwandlungstemperatur, durch DSC bestimmt

* Film löst sich auf

** Phthalsäurediethylester

*** handelsübliches Salatöl (Distelöl)

Beispiel 6

Vergleichsversuche

Vergleichsversuch V6.1

Beispiel 2 wurde mit folgender Änderung nachgearbeitet: polymerisiert wurde eine Monomermischung der Zusammensetzung:
70.5 Gew.-% Ethylacrylat, 26 Gew.-% Methylacrylat, 2,5 Gew.-% N-Methylolacrylamid und 1 Gew.-% Acrylsäure.

Vergleichsversuch V6.2 :

Beispiel 2 wurde mit folgender Änderung nachgearbeitet: polymerisiert wurde eine Monomermischung der Zusammensetzung :
70 Gew.-% Ethylacrylat, 26 Gew.-% Methylacrylat, 3 Gew.-% Acrylamidoglykolsäure und 1 Gew.-% Acrylsäure.

Vergleichsversuch V6.3:

Beispiel 2 wurde ohne Zusatz von Acrylnitril nachgearbeitet: polymerisiert wurde eine Monomermischung der Zusammensetzung:
95.5 Gew.-% Ethylacrylat, 3.5 Gew.-% Acrylamidoglykolsäure und 1 Gew.-% Acrylsäure.

Vergleichsversuch V6.4 :

Beispiel 3 wurde ohne Zusatz von Acrylamidoglykolsäure nachgearbeitet: Zur Polymerisation kam eine Emulsion mit dem Monomerverhältnis 79 Gew.-% Butylacrylat, 20 Gew.-% Acrylnitril und 1 Gew.-% Acrylsäure.

Vergleichsversuch V6.5: Bsp. 2 aus EP 302 588

Vergleichsversuch V6.6: Bsp. 4 aus EP 19 169

Vergleichsversuch V 6.7

Beispiel 3 wurde ohne Zusatz von Acrylnitril nachgearbeitet: Zur Polymerisation kam eine Emulsion mit dem Monomerverhältnis 75.5 Gew.-% Butylacrylat, 20 Gew.-% Styrol, 3.5 Gew.-% Acrylamidoglykolsäure und 1 Gew.-% Acrylsäure.

Vergleichsversuch V 6.8

Beispiel 3 wurde ohne Verwendung von Acrylnitril nachgearbeitet bei folgender Monomerenzusammensetzung: 50 Gew.-% Vinylpropionat, 47.5 Gew.-% Ethylacrylat, 2.5 Gew.-% Acrylamidoglykolsäure, der Feststoffanteil betrug 48 Gew.%.

Vergleichsversuch V 6.9

Beispiel 3 wurde mit dem Unterschied nachgearbeitet, daß in einer 40 Gew.%igen Polymerdispersion Methylmethacrylat anstelle von Acrylnitril als hartmachendes Monomer eingesetzt wurde.

Tabelle 6

| Vergleichsbeispiel | EA | BA | MA | MMA | AN | S | VPr | AAG | AMOL | MAGME | AS | pH | LD [%] | η [mPas] |
|---|---|---|---|---|---|---|---|---|---|---|---|---|---|---|
| V6.1 | 70,5 | - | 26 | - | - | - | - | - | 2,5 | - | 1 | 2,1 | 68 | 15 |
| V6.2 | 70 | - | 26 | - | - | - | - | 3 | - | - | 1 | 1,8 | 63 | 26 |
| V6.3 | 95,5 | - | - | - | - | - | - | 3,5 | - | - | 1 | 1,9 | 81 | 88 |
| V6.4 | - | 79 | - | - | 20 | - | - | - | - | - | 1 | 4,2 | 55 | 15 |
| V6.5 | - | 52 | | 39 | - | - | - | - | - | 8 | 1 | 2,1 | 69 | 43 |
| V6.6 | 95,5 | - | - | - | - | - | - | 3,5 | - | - | 1 | 1,5 | 57 | 7 |
| V6.7 | - | 75,5 | - | - | - | 20 | - | 3,5 | - | - | 1 | 2,0 | 39 | 88 |
| V6.8 | 47,5 | - | - | - | - | - | 50 | 2,5 | - | - | - | 3,1 | 60 | 19 |
| V6.9 | - | 77,5 | - | 18 | - | - | - | 3,5 | - | - | 1 | 1,9 | 59 | 10 |

Beispiel 7

Vliesstoff-Prüfung und Ergebnisse

Tabelle 7

| Polymerisat | Streifenzugversuche | | | | | | Biegesteifigkeit | |
|---|---|---|---|---|---|---|---|---|
| v. Bsp. Nr. | trocken | | naß | | perfeucht | | | |
| | l | q | l | q | l | q | l | q |
| 1.1 | 65 | 52 | 37 | 32 | 24 | 18 | 67 | 56 |
| 1.2 | 65 | 48 | 36 | 29 | 23 | 17 | 46 | 46 |
| 1.3 | 67 | 49 | 32 | 25 | 22 | 15 | 79 | 27 |
| 1.4 | 61 | 53 | 31 | 25 | 17 | 11 | 52 | 40 |
| 1.5 | 57 | 46 | 25 | 17 | 19 | 14 | 39 | 32 |
| 1.6 | 58 | 44 | 27 | 23 | 25 | 19 | 42 | 33 |
| 2.1 | 69 | 55 | 53 | 39 | 30 | 19 | 56 | 42 |
| 2.2 | 81 | 32 | 53 | 15 | 29 | 11 | 80 | 52 |
| 2.3 | 80 | 34 | 49 | 16 | 30 | 13 | 117 | 80 |
| 2.4 | 64 | 28 | 46 | 13 | 43 | 18 | 227 | 155 |
| 3.1 | 66 | 45 | 28 | 25 | 22 | 15 | 38 | 28 |
| 3.2 | 69 | 48 | 26 | 20 | 22 | 18 | 37 | 22 |
| 3.3 | 69 | 50 | 31 | 23 | 23 | 16 | 43 | 34 |
| 3.4 | 68 | 48 | 31 | 23 | 25 | 16 | 52 | 33 |
| 3.5 | 67 | 44 | 27 | 23 | 23 | 16 | 54 | 36 |
| 3.6 | 75 | 45 | 38 | 23 | 21 | 12 | 36 | 23 |
| 3.7 | 73 | 47 | 34 | 26 | 19 | 15 | 38 | 24 |
| 3.8 | 60 | 44 | 26 | 18 | 17 | 11 | 37 | 24 |
| 3.9 | 71 | 46 | 42 | 36 | 23 | 18 | 98 | 55 |
| 3.10 | 74 | 47 | 40 | 33 | 28 | 25 | 110 | 64 |
| 4.1 | 70 | 44 | 43 | 26 | 29 | 14 | 66 | 43 |
| 4.2 | 69 | 46 | 31 | 22 | 25 | 15 | 32 | 25 |
| 4.3 | 77 | 50 | 44 | 30 | 26 | 16 | 43 | 25 |
| V6.1 | 62 | 41 | 46 | 29 | 21 | 10 | 31 | 22 |
| V6.2 | 73 | 50 | 43 | 25 | 12 | 5 | 30 | 18 |
| V6.3 | 77 | 55 | 45 | 32 | 8 | 4 | 25 | 18 |
| V6.4 | 64 | 46 | 21 | 16 | 9 | 9 | 26 | 15 |
| V6.5 | 79 | 44 | 53 | 33 | 15 | 7 | 63 | 48 |
| V6.6 | 52 | 36 | 32 | 22 | 7 | 4 | 32 | 21 |
| V6.7 | 70 | 33 | 40 | 17 | 6 | 2 | 31 | 13 |
| V6.8 | 77 | 51 | 39 | 28 | 4 | 2 | 28 | 18 |
| V6.9 | 59 | 30 | 44 | 19 | 7 | 2 | 26 | 18 |

**Patentansprüche**

1. Formaldehydfreie wäßrige Kunstharzdispersionen, erhältlich durch einstufige Emulsionspolymerisation von Monomergemischen bestehend aus

   (A) 50 bis 99 Gew.-% wenigstens eines Monomeren aus der Gruppe der Acrylsäure- und Methacrylsäureester von $C_1$-$C_{14}$-Alkanolen, der Vinylester von bis zu 5 C-Atomen tragenden gesättigten Monocarbonsäuren sowie Styrol (Monomere A),

   (B) 0,5 bis 40 Gew.-% wenigstens eines der Monomeren Acrylnitril oder Methacrylnitril (Monomere B),

   (C) 0,5 bis 10 Gew.-% wenigstens eines Monomeren der allgemeinen Formel I

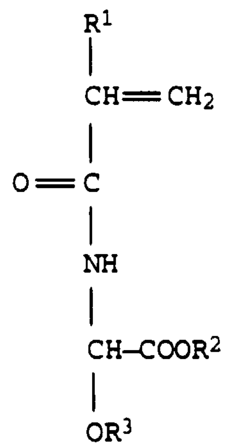

I

   in der $R^1$ für Wasserstoff oder die Methylgruppe steht und $R^2$ und $R^3$ unabhängig voneinander Wasserstoff oder einen $C_1$-$C_4$-Alkylrest bedeuten (Monomere C),

   D) 0 bis 5 Gew.-% wenigstens eines Monomeren aus der Gruppe der 3 bis 5 C-Atome tragenden $\alpha,\beta$-ungesättigten Mono- und Dicarbonsäuren, deren Amiden und Anhydriden (Monomere D), und

   E) 0 bis 3 Gew.-% wenigstens eines weiteren bifunktionellen Monomeren (Monomere E).

2. Wäßrige Kunstharzdispersionen nach Anspruch 1, enthaltend als Monomer C Acrylamidoglykolsäure.

3. Wäßrige Kunstharzdispersion nach Anspruch 2, enthaltend ein Umsetzungsprodukt von Acrylamid und Glyoxylsäure.

4. Verfahren zur Herstellung von formaldehydfreien wäßrigen Kunstharzdispersionen gemäß einem der Ansprüche 1 bis 3, daduch gekennzeichnet, daß eine Monomerenmischung bestehend aus

   (A) 50 bis 99 Gew.-% wenigstens eines Monomeren aus der Gruppe der Acrylsäure- und Methacrylsäureester von $C_1$-$C_{14}$-Alkanolen, der Vinylester von bis zu 5 C-Atomen tragenden aliphatischen Monocarbonsäuren sowie Styrol (Monomere A),

   (B) 0,5 bis 40 Gew.-% wenigstens eines der Monomeren Acrylnitril oder Methacrylnitril (Monomere B),

   (C) 0,5 bis 10 Gew.-% wenigstens eines Monomeren der allgemeinen Formel I (Monomere C)

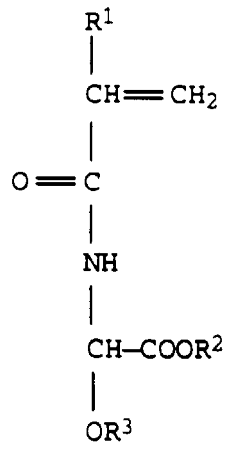

I

in der $R^1$ für Wasserstoff oder die Methylgruppe steht und $R^2$ und $R^3$ unabhängig voneinander Wasserstoff oder einen $C_1$-$C_4$-Alkylrest bedeuten (Monomere C),

(D) 0 bis 5 Gew.-% wenigstens eines Monomeren aus der Gruppe der 3 bis 5 C-Atome tragenden monoolefinisch $\alpha,\beta$-ungesättigten Mono- und Dicarbonsäuren und deren Amiden oder Anhydriden (Monomere D),

(E) 0 bis 3 Gew.-% wenigstens eines weiteren bifunktionellen Monomeren (Monomere E),

durch einstufige Emulsionspolymerisation copolymerisiert wird.

**5.** Verfahren nach Anspruch 5, dadurch gekennzeichnet, daß das wäßrige Polymerisat im Anschluß an die Emulsionspolymerisation mit einem Redoxinitiatorsystem nachbehandelt wird.

**6.** Verwendung von wäßrigen Dispersionen gemäß einem der Ansprüche 1 bis 5 als Bindemittel für textile Fasergebilde.

**7.** Verwendung nach Anspruch 6 zur Herstellung von adhäsiv verfestigten Faservliesstoffen mit guter chemischer Reinigungsbeständigkeit und Lösemittelbeständigkeit und Druckfarbenbeständigkeit.

**8.** Verwendung nach Anspruch 6 zur Herstellung von gegen Wasser, Ölen und Lösemittel beständigen Filtermaterialien.

**9.** Verwendung nach Anspruch 6 zur Herstellung von gegen Wasser, Öl und Lösemittel und Lösemitteldämpfen beständigen Einwegartikeln.

**10.** Textile Fasergebilde, erhältlich durch Verfestigung von Fasern unter Verwendung einer wäßrigen Dispersion gemäß einem der Ansprüche 1 bis 5 als Bindemittel.

## Claims

**1.** Formaldehyde-free aqueous synthetic resin dispersions obtainable by single-stage emulsion polymerization of monomer mixtures containing

(A) from 50 to 99 % by weight of at least one monomer selected from the group consisting of the acrylic and methacrylic esters of $C_1$-$C_{14}$-alkanols, the vinyl esters of saturated monocarboxylic acids having up to 5 carbon atoms, and styrene (monomer A),

(B) from 0.5 to 40 % by weight of at least one of the monomers acrylonitrile and methacrylonitrile (monomer B),

(C) from 0.5 to 10 % by weight of at least one monomer of the general formula I

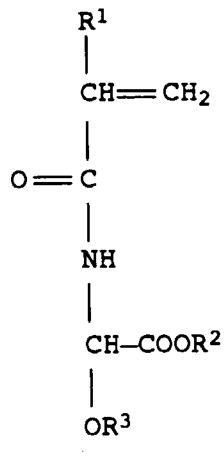

I

where $R^1$ is hydrogen or methyl and $R^2$ and $R^3$ are each independently of the other hydrogen or $C_1$-$C_4$-alkyl (monomer C),

(D) from 0 to 5 % by weight of at least one monomer selected from the group consisting of the 3 carbon to 5 carbon α,β-unsaturated mono- and dicarboxylic acids and their amides and anhydrides (monomer D), and

(E) from 0 to 3 % by weight of at least one further bifunctional monomer (monomer E).

**2.** Aqueous synthetic resin dispersions as claimed in claim 1, wherein monomer C is acrylamidoglycolic acid.

**3.** An aqueous synthetic resin dispersion as claimed in claim 2, comprising a reaction product of acrylamide and glyoxylic acid.

**4.** A process for preparing formaldehyde-free aqueous synthetic resin dispersions as claimed in any of claims 1 to 3, which comprises subjecting a monomer mixture containing

(A) from 50 to 99 % by weight of at least one monomer selected from the group consisting of the acrylic and methacrylic esters of $C_1$-$C_{14}$-alkanols, the vinyl esters of aliphatic monocarboxylic acids having up to 5 carbon atoms, and styrene (monomer A),

(B) from 0.5 to 40 % by weight of at least one of the monomers acrylonitrile and methacrylonitrile (monomer B),

(C) from 0.5 to 10 % by weight of at least one monomer of the general formula I (monomer C)

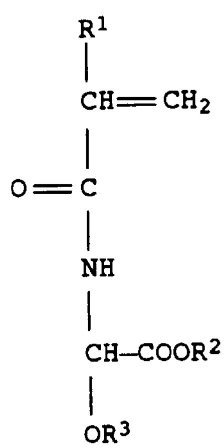

I

where $R^1$ is hydrogen or methyl and $R^2$ and $R^3$ are each independently of the other hydrogen or $C_1$-$C_4$-alkyl (monomer C),

(D) from 0 to 5 % by weight of at least one monomer selected from the group consisting of the 3 carbon to 5 carbon α,β-unsaturated mono- and dicarboxylic acids and their amides or anhydrides (monomer D), and

(E) from 0 to 3 % by weight of at least one further bifunctional monomer (monomer E),

to a single-stage emulsion copolymerization.

**5.** A process as claimed in claim 4, further comprising after-treating the aqueous polymer with a redox initiator system following the emulsion polymerization.

**6.** The use of aqueous dispersions as claimed in any of claims 1 to 5 as bonding agents for textile fiber materials.

**7.** A use as claimed in claim 6 for producing adhesively bonded fiber webs having good drycleaning, solvent and printing ink resistance.

**8.** A use as claimed in claim 6 for producing water-, oil- and solvent-resistant filter materials.

**9.** A use as claimed in claim 6 for producing disposable articles resistant to water, oil and solvents and solvent vapors.

**10.** Textile fiber materials obtainable by consolidating fibers using an aqueous dispersion as claimed in any of claims 1 to 5 as bonding agent.

**Revendications**

**1.** Dispersions aqueuses de résines synthétiques dépourvues de formaldéhyde, obtenues par polymérisation en émulsion en une seule étape de mélanges de monomères composés de

A) 50 à 99% en poids d'au moins un monomère du groupe des esters d'acide acrylique ou méthacrylique et d'alcanols en $C_1$-$C_{14}$, des esters vinyliques d'acides monocarboxyliques saturés comportant jusqu'à 5 atomes de carbone, ainsi que du styrène (monomère A),
B) 0,5 à 40% en poids d'au moins l'un des monomères acrylonitrile ou méthacrylonitrile (monomère B),
C) 0,5 à 10% en poids d'au moins un monomère de formule générale I

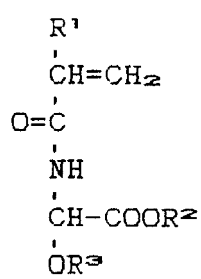

I

dans laquelle $R^1$ est mis pour un atome d'hydrogène ou le groupement méthyle et $R^2$ et $R^3$ représentent chacun, indépendamment l'un de l'autre, un atome d'hydrogène ou un reste alkyle en $C_1$-$C_4$ (monomère C),
D) 0 à 5% en poids d'au moins un monomère du groupe des acides mono- et dicarboxyliques α,β-insaturés à 3-5 atomes de carbone, de leurs amides et anhydrides (monomère D), et
E) 0 à 3% en poids d'au moins un autre monomère bifonctionnel (monomère E).

**2.** Dispersions aqueuses de résines synthétiques selon la revendication 1, contenant de l'acide acrylamidoglycolique en tant que monomère C,

**3.** Dispersions aqueuses de résines synthétiques selon la revendication 2, contenant un produit de réaction d'acrylamide et d'acide glyoxylique.

**4.** Procédé de préparation de dispersions aqueuses de résines synthétiques dépourvues de formaldéhyde selon l'une quelconque des revendications 1 à 3, caractérisé en ce qu'un mélange de monomères composé de

A) 50 à 99% en poids d'au moins un monomère du groupe des esters d'acide acrylique ou méthacrylique et d'alcanols en $C_1$-$C_{14}$, des esters vinyliques d'acides monocarboxyliques aliphatiques saturés comportant jusqu'à 5 atomes de carbone, ainsi que du styrène (monomère A),
B) 0,5 à 40% en poids d'au moins l'un des monomères acrylonitrile ou méthacrylonitrile (monomère B),
C) 0,5 à 10% en poids d'au moins un monomère de formule générale I

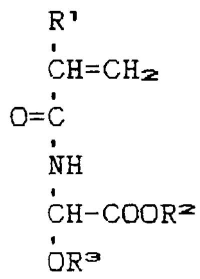

I

dans laquelle $R^1$ est mis pour un atome d'hydrogène ou le groupement méthyle et $R^2$ et $R^3$ représentent chacun, indépendamment l'un de l'autre, un atome d'hydrogène ou un reste alkyle en $C_1$-$C_4$ (monomère C),
D) 0 à 5% en poids d'au moins un monomère du groupe des acides mono- et dicarboxyliques à insaturation $\alpha,\beta$-monooléfinique à 3-5 atomes de carbone et de leurs amides ou anhydrides (monomère D),
E) 0 à 3% en poids d'au moins un autre monomère bifonctionnel (monomère E)

est copolymérisé par polymérisation en émulsion en une seule étape.

**5.** Procédé selon la revendication 5, caractérisé en ce qu'à la suite de la polymérisation en émulsion, le polymère aqueux est soumis à un post-traitement par un système amorceur redox.

**6.** Utilisation de dispersions aqueuses selon l'une quelconque des revendications 1 à 5 comme liant pour des produits textiles en fibres.

**7.** Utilisation selon la revendication 6 pour la fabrication de non-tissés de fibres fixés par un adhésif, ayant de bonnes caractéristiques de résistance au nettoyage à sec, de stabilité aux solvants et de stabilité aux entres d'imprimerie.

**8.** Utilisation selon la revendication 6 pour la fabrication de matières filtrantes résistantes à l'eau, aux huiles et aux solvants.

**9.** Utilisation selon la revendication 6 pour la fabrication d'articles à jeter résistants à l'eau, à l'huile, aux solvants et aux vapeurs de solvants.

**10.** Produits textiles en fibres, obtenus par fixation de fibres en utilisant, comme liant, une dispersion aqueuse selon l'une quelconque des revendications 1 à 5.